# EUROPEAN PATENT APPLICATION

(11) **EP 4 693 425 A1**
(43) Date of publication of application: **11.02.2026**
(21) Application number: 24778780.7
(22) Date of filing: 14.02.2024
(51) Int. Cl.: H01M 4/04, H01M 4/139

(54) **DEVICE FOR PRODUCING ROLLED GRAIN LAYER AND METHOD FOR PRODUCING ROLLED GRAIN LAYER**

(30) Priority: 24.03.2023 JP 2023047742
(71) Applicant: Zeon Corporation, Tokyo 100-8246 (JP)
(72) Inventor: KITAGAWA, Yuya, Tokyo 100-8246 (JP)
(74) Representative: Maiwald GmbH
(86) International application number: PCT/JP2024/005122
(87) International publication number: WO 2024/202635

(57) **Abstract**

A production apparatus for a rolled particle layer comprising:a feeding unit configured to feed particles; a supporting and conveying unit configured to support the particles fed from the feeding unit and convey the particles from upstream to downstream; a squeegee unit disposed with a gap between the squeegee unit and the supporting and conveying unit on the supporting and conveying unit, the squeegee unit being configured to level the particles supported and conveyed by the supporting and conveying unit to form a particle layer; an ultrasonic vibration unit configured to apply vibration to the particles, which are supported and conveyed by the supporting and conveying unit, on an upstream side relative to the gap between the supporting and conveying unit and the squeegee unit; and a rolling unit configured to roll the particle layer to form a rolled particle layer.

## Description

### Field

The present invention relates to a production apparatus for a rolled particle layer and a method for producing a rolled particle layer.

### Background

A technique is known in which particles are fed onto a surface of a receiving member, such as a substrate, and the particles are leveled by a cylindrical squeegee roll to form a particle layer, which is then rolled to produce a rolled particle layer. At this time, a technique is known in which the squeegee roll is vibrated so that the shortest distance between the outer peripheral surface of the squeegee roll and the surface of the receiving member is kept constant (see Patent Literature 1).

Further, there is known a technique for improving the density of a to-be-formed particle layer by providing a squeegee roll at a specific position (see Patent Literature 2) .

### Citation List

### Patent Literature

Patent Literature 1: Japanese Patent No. 6231292 (Corresponding foreign publication: U.S. patent application publication No. 2016/0043382)
Patent Literature 2: Japanese Patent No. 6402200 (Corresponding foreign publication: U.S. patent application publication No. 2017/0352874)

### Summary

### Technical Problem

In a conventional production apparatus for a rolled particle layer including a squeegee roll, it may be difficult to increase the density of the particle layer. As a result, it may be difficult to obtain a rolled particle layer having a high basis weight. In particular, in the case of particles having low fluidity or particles having low bulk density, it is difficult to increase the density of the particle layer. Even if a particle layer is obtained, there is a tendency that the density fluctuation of the particle layer is large, and as a result, there is a tendency that the fluctuation in the basis weight of the rolled particle layer is large.

Therefore, there is a need for a novel production apparatus for a rolled particle layer, the apparatus being capable of improving the density of the particle layer and in turn the basis weight of the rolled particle layer; and a novel method for producing a rolled particle layer, the method being capable of improving the basis weight of the rolled particle layer.

### Solution to Problem

The present inventor has made intensive studies to solve the above-mentioned problems. As a result, the present inventor has found that the above-mentioned problems can be solved by a production apparatus for a rolled particle layer including an ultrasonic vibration unit that is configured to apply vibration to particles, which are supported and conveyed by a supporting and conveying unit, on an upstream side relative to a gap between the supporting and conveying unit and a squeegee unit, thereby completing the present invention.

That is, the present invention provides the following.
<1> A production apparatus for a rolled particle layer comprising:
   a feeding unit configured to feed particles;
   a supporting and conveying unit configured to support the particles fed from the feeding unit and convey the particles from upstream to downstream;
   a squeegee unit disposed with a gap between the squeegee unit and the supporting and conveying unit on the supporting and conveying unit, the squeegee unit being configured to level the particles supported and conveyed by the supporting and conveying unit to form a particle layer;
   an ultrasonic vibration unit configured to apply vibration to the particles, which are supported and conveyed by the supporting and conveying unit, on an upstream side relative to the gap between the supporting and conveying unit and the squeegee unit; and
   a rolling unit configured to roll the particle layer to form a rolled particle layer.
<2> The production apparatus for a rolled particle layer according to <1>, wherein:
   the supporting and conveying unit includes a conveying roll configured to be rotatable about a rotation axis R1 in a direction in which the particles are conveyed from upstream to downstream;
   the squeegee unit includes a squeegee roll configured to be rotatable about a rotation axis R2 parallel to the rotation axis R1;
   the squeegee roll is disposed on the conveying roll with a gap between the squeegee roll and the conveying roll; and
   the ultrasonic vibration unit includes an ultrasonic vibrator and a plate-shaped portion connected to the ultrasonic vibrator, the plate-shaped portion being disposed between the conveying roll and the squeegee roll.
<3> The production apparatus for a rolled particle layer according to <2>, wherein the plate-shaped portion includes an opening capable of allowing the particles to pass through in a thickness direction of the plate-shaped portion.
<4> The production apparatus for a rolled particle layer according to <2> or <3>, wherein the plate-shaped portion includes a projecting portion that projects toward a plane P1 including the rotation axis R1 of the conveying roll and the rotation axis R2 of the squeegee roll.
<5> The production apparatus for a rolled particle layer according to <4>, wherein the plate-shaped portion includes a plurality of the projecting portions.
<6> The production apparatus for a rolled particle layer according to <4>, wherein the plate-shaped portion includes only one projecting portion, and a tip end of the projecting portion is on a center line of the plate-shaped portion in a direction parallel to the rotation axis R1.
<7> A method for producing a rolled particle layer, comprising the steps of:
   feeding particles by a feeding unit;
   supporting and conveying the particles fed from the feeding unit from upstream to downstream by a supporting and conveying unit;
   leveling the particles, which are supported and conveyed by the supporting and conveying unit, by a squeegee unit disposed with a gap between the squeegee unit and the supporting and conveying unit on the supporting and conveying unit to form a particle layer;
   applying, by an ultrasonic vibration unit, vibration to the particles, which are supported and conveyed by the supporting and conveying unit, on an upstream side relative to the gap between the supporting and conveying unit and the squeegee unit; and
   rolling the particle layer by a rolling unit to form a rolled particle layer.

### Advantageous Effects of Invention

According to the present invention, it is possible to provide a novel production apparatus being capable of improving the density of the particle layer and in turn the basis weight of the rolled particle layer; and a novel method for producing a rolled particle layer, the method being capable of improving the basis weight of the rolled particle layer.

### Brief Description of Drawings

FIG. 1 is a schematic view schematically illustrating a first example of a production apparatus for a rolled particle layer.
FIG. 2 is a schematic view schematically illustrating a second example of a production apparatus for a rolled particle layer.
FIG. 3 is a perspective view schematically illustrating an example of a plate-shaped portion.
FIG. 4 is a perspective view schematically illustrating an example of a plate-shaped portion including a plurality of openings.
FIG. 5 is a perspective view schematically illustrating a first example of a plate-shaped portion including a projecting portion.
FIG. 6 is a perspective view schematically illustrating a second example of a plate-shaped portion including a plurality of projecting portions.
FIG. 7 is a perspective view schematically illustrating a third example of a plate-shaped portion including polygonal projecting portions.
FIG. 8 is a graph plotting the basis weights at five locations along the width direction of negative electrode sheets for Example 1 and Comparative Example 1.

### Description of Embodiments

Hereinafter, the present invention will be described in detail with reference to embodiments and examples. However, the present invention is not limited to embodiments and examples described below, and may be freely modified for implementation without departing from the scope of claims of the present invention and the scope of their equivalents. Components of embodiments described below may be combined as appropriate. In the drawings, the same components are denoted by the same reference numerals, and descriptions thereof may be omitted.

In the following description, a "long-length" film refers to a film with the length that is 5 times or more the width of the film, and preferably a film with the length that is 10 times or more the width thereof, and specifically refers to a film with a length that allows a film to be wound up into a rolled shape for storage or transportation. The upper limit of the length of a film relative to the width of the film may be, but not particularly limited to, for example, 100,000 times or less the width.

In the following description, a direction of an element being "parallel", "perpendicular" or "orthogonal" may allow an error within the range of not impairing the advantageous effects of the present invention, for example, within a range of ±5°, ±3°, ±2°, or ±1°, unless otherwise specified.

In the following description, the terms "upstream" and "downstream" mean upstream and downstream, respectively, in terms of the conveyance direction of particles, in the production apparatus for a rolled particle layer, unless otherwise specified.

In the following description, the meaning of being "on" an element includes both being directly on that element and being above that element, unless otherwise specified.

The production apparatus for a rolled particle layer of the present embodiment is preferably an apparatus for continuously producing a strip-shaped rolled particle layer by continuously conveying particles by a supporting and conveying unit, continuously forming a particle layer by a squeegee unit, and continuously rolling the particle layer by a rolling unit.

The "width of the particle layer" refers to the dimension of a particle layer in a direction perpendicular to both the conveyance direction and the thickness direction of the particle layer, unless otherwise specified.

The "width of the rolled particle layer" refers to the dimension of a rolled particle layer in a direction perpendicular to both the conveyance direction and the thickness direction of the rolled particle layer, unless otherwise specified.

The supporting and conveying unit that supports the particles may directly support the particles or indirectly (e.g., indirectly via a substrate) support the particles.

The bulk density of a powder, which is an aggregation of particles, means a value obtained by dividing the mass of the powder occupying a given space by the volume of the space occupied by the powder.

### <1. Production apparatus for rolled particle layer>

### <1.1. Summary>

A production apparatus for a rolled particle layer according to an embodiment of the present invention includes
a feeding unit configured to feed particles,
a supporting and conveying unit configured to support the particles fed from the feeding unit and convey the particles from upstream to downstream,
a squeegee unit disposed with a gap between the squeegee unit and the supporting and conveying unit on the supporting and conveying unit, the squeegee unit being configured to level the particles supported and conveyed by the supporting and conveying unit to form a particle layer,
an ultrasonic vibration unit configured to apply vibration to the particles, which are supported and conveyed by the supporting and conveying unit, on an upstream side relative to the gap between the supporting and conveying unit and the squeegee unit, and
a rolling unit configured to roll the particle layer to form a rolled particle layer.

According to the production apparatus for a rolled particle layer of the present embodiment, since the production apparatus are configured to apply vibration to the particles on the upstream side relative to the gap between the supporting and conveying unit and the squeegee unit, the fluidity of the particles is enhanced, and on the upstream side relative to the gap between the supporting and conveying unit and the squeegee unit, the bulk density of the powder, which is an aggregation of the particles, is increased. As a result, the density of the particle layer to be formed increases, and the basis weight of the rolled particle layer obtained by rolling the particle layer can be made to increase.

Furthermore, enhancement in the fluidity of the particles can reduce the density fluctuations of the particle layer. As a result, the fluctuations in basis weight of the rolled particle layer can be reduced.

Hereinafter, the production apparatus for a rolled particle layer of the present embodiment will be further described with reference to the drawings.

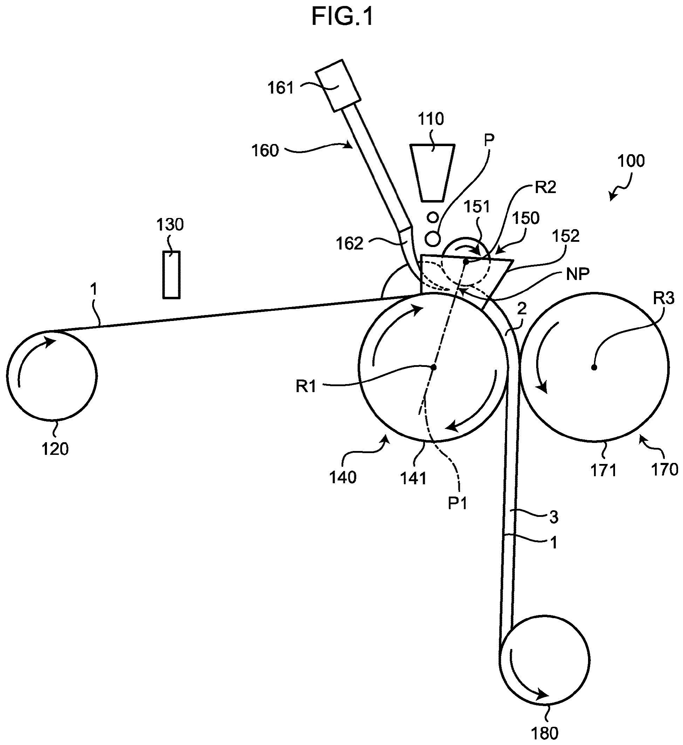

FIG. 1 is a schematic view schematically illustrating a first example of a production apparatus for a rolled particle layer.

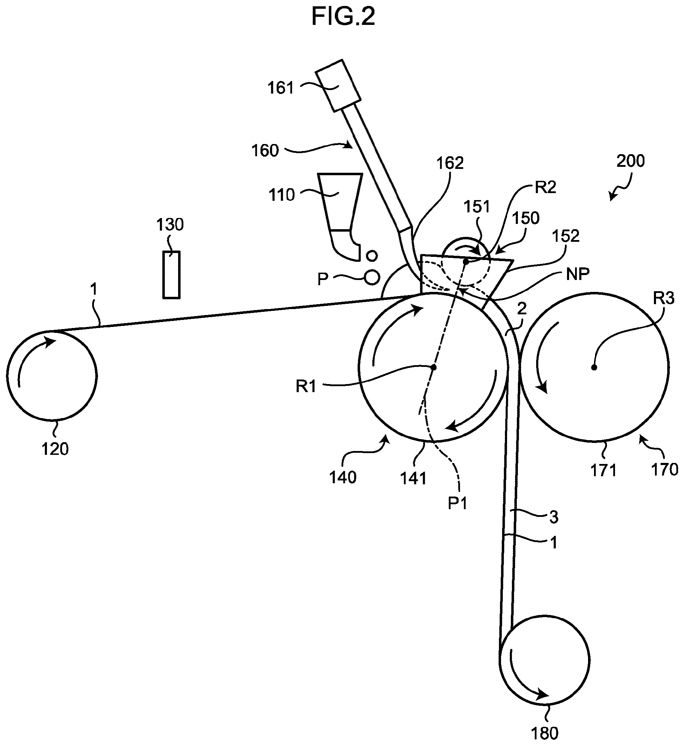

FIG. 2 is a schematic view schematically illustrating a second example of a production apparatus for a rolled particle layer.

As illustrated in FIG. 1, the production apparatus 100 for a rolled particle layer includes a feeding unit 110; a substrate unwinding unit 120; a coating unit 130; a supporting and conveying unit 140; a squeegee unit 150; an ultrasonic vibration unit 160; a rolling unit 170; and a collection unit 180. The supporting and conveying unit 140 includes a conveying roll 141. The squeegee unit 150 includes a squeegee roll 151 and a stock guide unit 152. The ultrasonic vibration unit 160 includes an ultrasonic vibrator 161 and a vibration transmitting member 162. The rolling unit 170 includes a conveying roll 141 and a rolling roll 171 as a rolling unit.

As shown in FIG. 2, the production apparatus 200 for a rolled particle layer includes a feeding unit 110; a substrate unwinding unit 120; a coating unit 130; a supporting and conveying unit 140; a squeegee unit 150; an ultrasonic vibration unit 160; a rolling unit 170; and a collection unit 180. The supporting and conveying unit 140 includes a conveying roll 141. The squeegee unit 150 includes a squeegee roll 151 and a stock guide unit 152. The ultrasonic vibration unit 160 includes an ultrasonic vibrator 161 and a vibration transmitting member 162. The rolling unit 170 includes a conveying roll 141 and a rolling roll 171 as a rolling unit.

The production apparatus 100 for a rolled particle layer and the production apparatus 200 for a rolled particle layer differ from each other in the position of the feeding unit 110.

### <1.2. Feeding unit>

The feeding unit 110 of the present embodiment is configured to feed the particles P to the supporting and conveying unit 140. As the feeding unit 110, for example, a hopper can be used. The hopper usually includes a container portion for storing the particles P, an inlet for charging particles into the container portion, and an outlet for discharging the particles from the container portion. In addition to the hopper, the feeding unit 110 may include an optional element such as a slope member that guides particles discharged from the hopper to a desired position so as to allow the particles to drop onto the supporting and conveying unit 140.

The feeding unit 110 is usually positioned upstream relative to the squeegee unit 150, where it can feed the particles P onto the supporting and conveying unit 140. The feeding unit 110 is preferably disposed so as to be capable of feeding the particles P to the central region of the supporting and conveying unit 140 in a direction orthogonal to the conveyance direction of the particles P conveyed by the supporting and conveying unit 140. When the supporting and conveying unit 140 includes the conveying roll 141 as will be described later, the feeding unit 110 is disposed on the peripheral surface of the conveying roll 141 so that the feeding unit 110 can feed the particles P to the central region of the conveying roll 141 in the width direction.

When the supporting and conveying unit 140 conveys the particles P downstream via the substrate 1, the feeding unit 110 is configured to feed the particles P onto the substrate 1.

The distance from the supporting and conveying unit 140 to the feeding unit 110 can be appropriately selected depending on the fed amount of the particles P, the width of the particle layer 2 to be formed, and the like.

In general, the feeding unit 110 can adjust the fed amount of the particles P so that the basis weight of the rolled particle layer 3 to be produced becomes a desired amount.

As illustrated in FIG. 1, the feeding unit 110 may be configured to be capable of feeding the particles P between the squeegee roll 151 that may be included in the squeegee unit 150 and the vibration transmitting member 162 that may be included in the ultrasonic vibration unit 160. As illustrated in FIG. 2, the feeding unit 110 may be configured to be capable of feeding the particles P between the conveying roll 141 that may be included in the supporting and conveying unit 140 and the vibration transmitting member 162 that may be included in the ultrasonic vibration unit 160. Since the fluctuations in basis weight in the width direction of the rolled particle layer becomes smaller, the feeding unit 110 is preferably configured to be capable of feeding the particles P between the squeegee roll 151 and the vibration transmitting member 162.

### <1.3. Supporting and conveying unit>

The supporting and conveying unit 140 is configured to support the particles P fed from the feeding unit 110 and convey the particles P from upstream to downstream. As the supporting and conveying unit 140, a supporting and conveying unit including the conveying roll 141 can be used. In addition to the conveying roll 141, the supporting and conveying unit 140 may include an optional element, such as a driving device that drives the conveying roll 141.

The conveying roll 141 generally has a cylindrical shape, and is configured to be rotatable about a rotation axis R1 in a direction in which the particles P are conveyed from upstream to downstream.

The supporting and conveying unit 140 may convey the particles P downstream via the substrate 1. That is, the supporting and conveying unit 140 may convey the particles P on the substrate 1 downstream together with the substrate 1. The particles P may be placed directly on the supporting and conveying unit 140 and conveyed downstream without the intervention of the substrate 1.

### <1.4. Squeegee unit>

The squeegee unit 150 is disposed on the supporting and conveying unit 140, specifically, on a surface of the supporting and conveying unit 140 that supports the particles P, with a gap NP formed between the squeegee unit 150 and the supporting and conveying unit 140. The squeegee unit 150 is configured to level the particles P supported and conveyed by the supporting and conveying unit 140 to thereby form the particle layer 2. The squeegee unit 150 may be a squeegee unit including the squeegee roll 151 having a cylindrical shape and configured to be rotatable about a rotation axis R2. The squeegee unit 150 may include any optional element, in addition to the squeegee roll 151, such as a pair of stock guide units 152 that define the width of the particle layer 2. It is preferable that each of the paired stock guide units 152 that may be included in the squeegee unit 150 has a face parallel to an end face of the squeegee roll 151. The respective paired stock guide units 152 are disposed so that a distance between the parallel faces included in the pair of stock guide units 152 corresponds to the width of the particle layer 2.

The squeegee roll 151 is usually disposed so that its rotation axis R2 becomes parallel to the rotation axis R1 of the conveying roll 141. The direction of rotation about the rotation axis R2 of the squeegee roll 151 is arbitrary, and may be the same direction as the rotation direction of the conveying roll 141, or may be the opposite direction. The direction of rotation is preferably the same direction as the rotation direction of the conveying roll 141.

When the fed particles P pass through the gap NP between the squeegee unit 150 and the supporting and conveying unit 140, the particles P are leveled to form the particle layer 2. In general, the thickness of the particle layer 2 is the same as or smaller than the size of the gap NP between the squeegee unit 150 and the supporting and conveying unit 140. The squeegee unit 150 is configured so that the size of the gap NP between the squeegee unit 150 and the supporting and conveying unit 140 can be adjusted. For example, the position of the rotation axis of the squeegee roll 151 that may be included in the squeegee unit 150 is configured to be movable, whereby the size of the gap NP between the squeegee unit 150 and the supporting and conveying unit 140 can be adjusted.

### <1.5. Ultrasonic vibration unit>

The ultrasonic vibration unit 160 is configured to apply vibration to the particles P supported and conveyed by the supporting and conveying unit 140 on the upstream side relative to the gap NP between the supporting and conveying unit 140 and the squeegee unit 150. When vibration is applied to the conveyed particles P, the fluidity of the particles P is enhanced. Therefore, the bulk density of the powder, which is an aggregation of the particles P, increases. As a result, the density of the particle layer 2 to be formed increases, and the basis weight of the rolled particle layer 3 obtained by rolling the particle layer 2 can be made to increase.

Furthermore, enhancement of the fluidity of the particles P can reduce density fluctuations of the particle layer 2. As a result, fluctuations in basis weight of the rolled particle layer 3 can be reduced.

As the ultrasonic vibration unit 160, an ultrasonic vibration unit including the ultrasonic vibrator 161 and the vibration transmitting member 162, which is connected to the ultrasonic vibrator 161, can be used.

As the ultrasonic vibrator 161, any optional device capable of generating ultrasonic waves can be used. The term "ultrasonic waves" means sound waves having frequencies exceeding 20 kHz. The frequency of the ultrasonic waves to be generated may preferably be 30 kHz or higher, and preferably 38 kHz or lower.

A member having any optional shape can be used as the vibration transmitting member 162 that is connected to the ultrasonic vibrator 161 and applies vibration to the particles P.

Preferably, in order to efficiently apply vibration to the particles P existing in the vicinity of or within the gap NP between the supporting and conveying unit 140 and the squeegee unit 150, a plate-shaped portion having a plate shape can be used as the vibration transmitting member 162. The plate-shaped portion is disposed between the supporting and conveying unit 140 (for example, the conveying roll 141) and the squeegee unit 150 (for example, the squeegee roll 151).

Regarding the plate-shaped portion, its dimension in a direction perpendicular to the conveyance direction of the particles P is preferably narrower than the width of the squeegee roll 151, this width being in the direction of the rotation axis R2 of the squeegee roll 151.

It is preferable that the tip end portion of the plate-shaped portion is disposed as close as possible to the gap NP between the supporting and conveying unit 140 and the squeegee unit 150. With such a configuration, vibration can be efficiently applied to the particles P existing in the vicinity of or within the gap NP, so that the fluidity of the particles P existing in the vicinity of or within the gap NP can be further enhanced. As a result, the basis weight of the rolled particle layers 3 can be made to increase.

The plate-shaped portion may be a flat plate or a curved plate. The plate-shaped portion is preferably a curved plate because the tip end portion of the plate-shaped portion can be disposed in the vicinity of the gap NP between the supporting and conveying unit 140 and the squeegee unit 150 while avoiding obstructive contact with the supporting and conveying unit 140 and the squeegee unit 150. The plate-shaped portion may have, for example, a curved surface that faces the peripheral surface of the squeegee roll 151. The thickness of the plate-shaped portion may be uniform in an embodiment. A plate-shaped portion having a uniform thickness can be easily produced. The thickness of the plate-shaped portion may vary from location to location in another embodiment. The plate-shaped portion is configured so that the tip end portion thereof can be brought as close to the gap NP between the supporting and conveying unit 140 and the squeegee unit 150 as possible while avoiding obstructive contact with the supporting and conveying unit 140 and the squeegee unit 150, and the plate-shaped portion is preferably configured so as to have a smaller thickness as it approaches the gap NP.

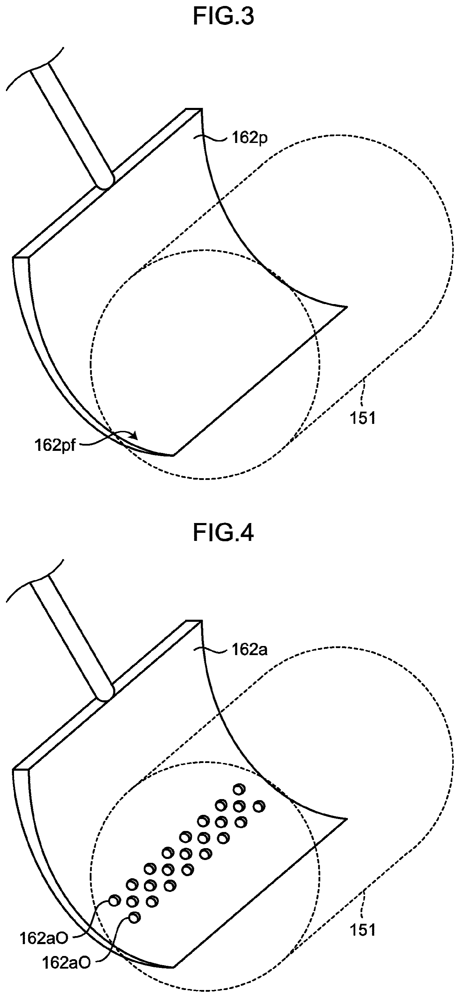

FIG. 3 is a perspective view schematically illustrating an example of a plate-shaped portion. In this example, the plate-shaped portion 162p is configured so as to have a smaller thickness as it approaches the gap NP, and has a curved surface 162pf that faces the peripheral surface of the squeegee roll 151.

The plate-shaped portion may include an opening capable of allowing particles to pass through in the thickness direction. The plate-shaped portion may not be provided with an opening, may be provided with only one opening, or may be provided with a plurality of openings. When the plate-shaped portion includes an opening(s), the shape and diameter of openings, number of openings to be provided, and positions of the openings to be provided are optionally determined. Since the plate-shaped portion includes the opening(s), the flow of the particles P fed by the feeding unit 110 and conveyed to the gap NP between the supporting and conveying unit 140 and the squeegee unit 150 is less likely to be obstructed by the plate-shaped portion, and the density fluctuations of the particle layers 2 to be formed can be further reduced. As a result, fluctuations in basis weight of the rolled particle layer 3 can be further reduced.

FIG. 4 is a perspective view schematically illustrating an example of a plate-shaped portion including a plurality of openings. In this example, a plurality of openings 162aO are formed in the intermediate part of the plate-shaped portion 162a.

A plurality of openings may be provided over the entire plate-shaped portion. For example, by using a punched metal plate to form the plate-shaped portion, it is possible to form a plate-shaped portion in which a plurality of openings are formed across its entirety.

The plate-shaped portion may include a projecting portion that projects toward a plane P1 (P1 in FIGs. 1 and 2) including the rotation axis R1 of the conveying roll 141 and the rotation axis R2 of the squeegee roll 151. Since the plate-shaped portion includes the projecting portion, the particles P fed by the feeding unit 110 are more smoothly conveyed from portions where the plate-shaped portion does not have any projecting portion to the gap NP between the supporting and conveying unit 140 and the squeegee unit 150, the density of the particle layers 2 to be formed is less likely to be uneven. As a result, fluctuations in basis weight of the rolled particle layer 3 can be reduced.

The plate-shaped portion may include only one projecting portion or a plurality of projecting portions. The shape and size of the projecting portion may be arbitrarily determined.

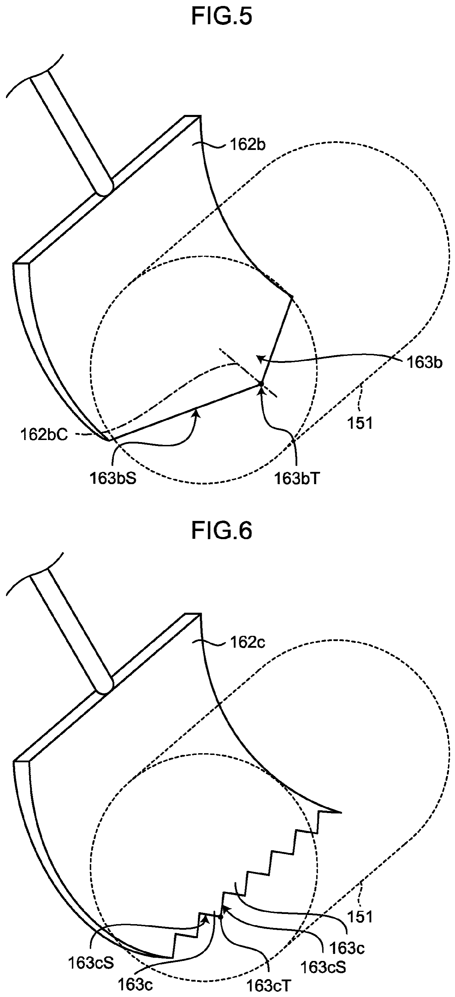

FIG. 5 is a perspective view schematically illustrating a first example of a plate-shaped portion including a projecting portion. In this example, the plate-shaped portion 162b includes only one projecting portion 163b, and the tip end 163bT of the projecting portion 163b is on a centerline 162bC of the plate-shaped portion 162b, this centerline 162bC being in the center with reference to a direction parallel to the rotation axis R1 of the conveying roll 141. The projecting portion 163b may have a straight inclined portion 163bS as viewed from the thickness direction of the plate-shaped portion 162b as in this example, or may have a curved inclined portion in another example.

Usually, the basis weight of the rolled particle layer 3 obtained by rolling the particle layer 2 tends to increase at both ends in a direction perpendicular to the conveyance direction. By using the plate-shaped portion 162b, the bulk density of the powder, which is an aggregation of retained particles P, on the upstream side relative to the gap NP between the supporting and conveying unit and the squeegee unit can be made to increase as the position approaches the tip end 163bT of the plate-shaped portion 162b. That is, the bulk density of the powder can be made to become smaller as the distance from the centerline 162bC of the plate-shaped portion 162b increases. As a result, the density of the particle layer 2 at both end portions of the layer 2 in the direction perpendicular to the conveyance direction (the width direction of the conveying roll 141) can be made to become smaller than the density at the center portion.

Therefore, by using the plate-shaped portion 162b, the basis weight at both end portions and the basis weight at the center portion of the rolled particle layer 3 in the direction perpendicular to the conveyance direction can be made to become nearly uniform.

FIG. 6 is a perspective view schematically illustrating a second example of a plate-shaped portion including a plurality of projecting portions. In this example, the plate-shaped portion 162c includes a plurality of projecting portions 163c. In this example, the projecting portions 163c included in the plate-shaped portion 162c have a zigzag shape as a whole, and the tip end 163cT of the projecting portion 163c is a vertex at which the straight inclined portions 163cS intersect when viewed from the thickness direction of the plate-shaped portion.

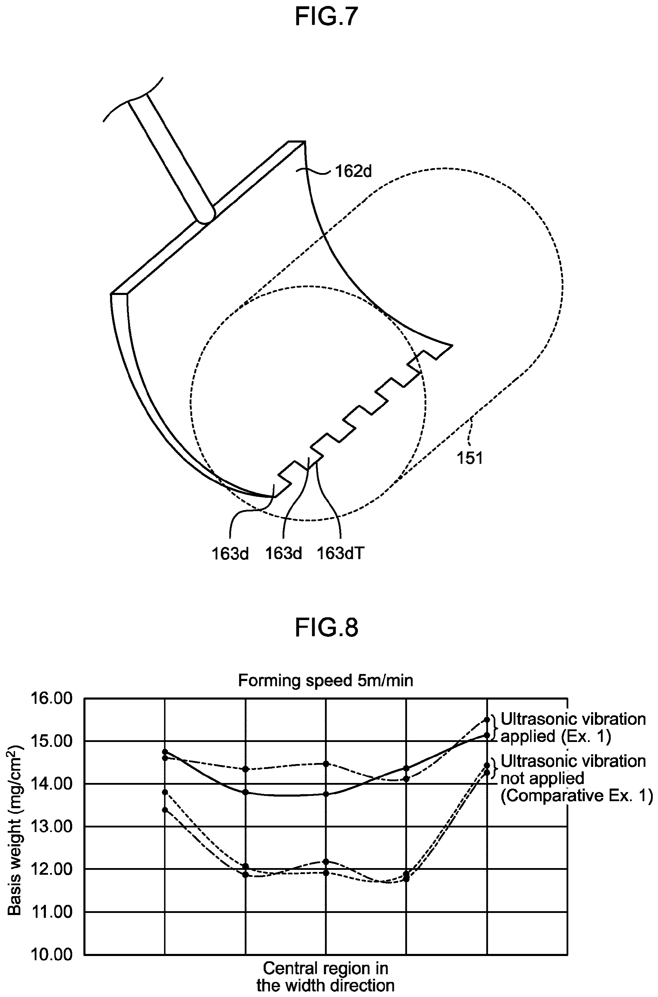

FIG. 7 is a perspective view schematically illustrating a third example of a plate-shaped portion including polygonal projecting portions. In this example, the plate-shaped portion 162d includes a plurality of polygonal projecting portions 163d. In this example, the projecting portions 163d included in the plate-shaped portion 162d have a comb-blade shape as a whole, and the tip end 163dT of the projecting portion 163d is linear when viewed from the thickness direction of the plate-shaped portion 162d.

The plate-shaped portion may include both a projecting portion and an opening. For example, the plate-shaped portion may include the openings 162aO illustrated in FIG. 4 and the projecting portion 163c illustrated in FIG. 5.

In addition to the ultrasonic vibrator 161 and the vibration transmitting member 162 such as the plate-shaped portion or the like, the ultrasonic vibration unit 160 may include an optional element such as a rod for connecting the ultrasonic vibrator 161 and the vibration transmitting member 162.

### <1.6. Rolling unit>

The rolling unit 170 is configured to roll the particle layer 2 to form the rolled particle layer 3.

A pair of rolls may be used as the rolling unit 170. As the pair of rolls, the conveying roll 141 described above and the rolling roll 171 may be used. That is, the conveying roll 141 may be configured to function also as a rolling roll. The rolling roll 171 is configured to be rotatable in a direction opposite to the rotation direction of the conveying roll 141. The conveying roll 141 and the rolling roll 171 are disposed so that the rotation axis R1 of the conveying roll 141 and the rotation axis R3 of the rolling roll 171, which serve as the rolling unit 170, are parallel to each other.

In another embodiment, the conveying roll 141 may not be used as the rolling unit 170, and a roll different from the conveying roll 141 may be provided as one of the paired rolls that serve as the rolling unit 170.

A gap is formed between the peripheral surface of the conveying roll 141 and the peripheral surface of the rolling roll 171 that serve as the rolling unit 170. By allowing the particle layer 2 to pass through the gap while the conveying roll 141 and the rolling roll 171 are rotated in respective opposite directions, a pressure is applied in a direction perpendicular to the surface direction of the particle layer 2, so that the particle layer 2 is rolled. In the rolling unit 170, the particles P are compressed, whereby the adhesion between the particles P can be enhanced, and the adhesion between the substances contained in the particles P can be enhanced. As a result, the strength of the rolled particle layer 3 can be enhanced.

The conveying roll 141 and the rolling roll 171 that serve as the rolling unit 170 are configured so that the size of the gap between the conveying roll 141 and the rolling roll 171 can be adjusted. For example, the conveying roll 141 and the rolling roll 171 are configured so that the position of the rotation axis R1 of the conveying roll 141 or the position of the rotation axis R3 of the rolling roll 171, or both can be moved.

The pressure applied to the particle layer 2 can be adjusted by adjusting the gap between the conveying roll 141 and the rolling roll 171 that serve as the rolling unit 170. For example, the pressure applied to the particle layer 2 can be adjusted by adjusting the difference between the size of the gap between the conveying roll 141, which serves as the supporting and conveying unit 140, and the squeegee roll 151, which serves as the squeegee unit 150, and the size of the gap between the conveying roll 141 and the rolling roll 171 that serve as the rolling unit 170. In this manner, the density of the rolled particle layer 3 can also be adjusted.

The gap between the conveying roll 141 and the rolling roll 171 that serve as the rolling unit 170 is usually adjusted so as to become smaller than the gap between the conveying roll 141 and the squeegee roll 151. The specific size of the gap can be appropriately adjusted depending on the thickness and density of the rolled particle layer 3.

Examples of the materials constituting the peripheral surfaces of the conveying roll 141 and the rolling roll 171, which serve as the rolling unit 170, may include rubber, metal, and inorganic materials.

The rolling roll 171 may have a mechanism for heating the peripheral surface thereof. With this mechanism, the particle layer 2 can be rolled while being heated. By rolling the particle layer 2 while heating, the binder that may be contained in the particles P can be softened or melted, so that the particles P can be more firmly bound to each other.

### <1.7. Optional components>

The production apparatus for a rolled particle layer may include, in addition to the foregoing components, any optional component(s) such as the substrate unwinding unit 120, the coating unit 130, the collection unit 180, and the like.

### (Substrate unwinding unit)

The substrate unwinding unit 120 is configured to unwind the substrate 1 that is a long-length wound body. As the substrate unwinding unit 120, an unwinding machine may be used. In another embodiment, the production apparatus may not include such a substrate unwinding unit 120.

In the present embodiment, the substrate unwinding unit 120 is configured to be disposed upstream relative to the supporting and conveying unit 140, as illustrated in FIG. 1 and FIG. 2, and to be capable of feeding the substrate 1 to the supporting and conveying unit 140.

In another embodiment, the substrate unwinding unit may be configured so that the substrate unwinding unit feeds the substrate to the rolling unit, the particle layer 2 formed on the supporting and conveying unit is rolled by the rolling unit on the fed substrate, and the rolled particle layer 3 can be transferred onto the substrate.

In yet another embodiment, the production apparatus for a rolled particle layer may include a first substrate unwinding unit and a second substrate unwinding unit. The first substrate unwinding unit may be configured to be capable of feeding a first substrate to the supporting and conveying unit, the second substrate unwinding unit may be configured to be capable of feeding a second substrate to the rolling unit, and the production apparatus may be configured to be capable of rolling the particle layer 2 formed on the first substrate between the first substrate and the second substrate.

### (Coating unit)

The coating unit 130 applies a binder coating liquid onto the substrate 1 to form a binder coating liquid layer. By feeding the particles P onto the binder coating liquid layer, the particles P can be brought into more close contact with the substrate 1. Examples of the coating unit 130 may include a slot die head, a gravure head, a bar coating head, and a knife coating head. In another embodiment, the production apparatus may not include such a coating unit 130.

### (Collection unit)

The collection unit 180 collects the produced rolled particle layer 3. The collection unit 180 is disposed on the downstream side relative to the rolling unit 170, and collects the formed rolled particle layer 3 together with the substrate 1. As the collection unit 180, a winding machine that winds up the long-length rolled particle layer 3 together with the substrate 1. In another embodiment, the production apparatus may not include such a collection unit 180.

### <2. Method for producing rolled particle layer>

### <2.1. Summary of method for producing rolled particle layer>

A method for producing a rolled particle layer according to an embodiment of the present invention includes:
a step (A) of feeding the particles by the feeding unit;
a step (B) of supporting and conveying the particles fed from the feeding unit from upstream to downstream by the supporting and conveying unit;
a step (C) of leveling the particles, which are supported and conveyed by the supporting and conveying unit, by a squeegee unit disposed with a gap between the squeegee unit and the supporting and conveying unit on the supporting and conveying unit to form a particle layer;
a step (D) of applying, by the ultrasonic vibration unit, vibration to the particles, which are supported and conveyed by the supporting and conveying unit, on an upstream side relative to the gap between the supporting and conveying unit and the squeegee unit; and
a step (E) of rolling the particle layer by the rolling unit to form a rolled particle layer.

The step (A) is usually performed before the steps (B), (C), (D), and (E).

The steps (B), (C), and (D) are usually performed simultaneously.

The step (E) is usually performed after the steps (B), (C), and (D).

The method for producing a rolled particle layer of the present embodiment is preferably performed by the production apparatus for a rolled particle layer described above.

According to the method for producing a rolled particle layer of the present embodiment, by applying vibration to the particles, the fluidity of the particles is enhanced, and the density of the particle layer to be formed is increased. As a result, the basis weight of the rolled particle layer that is obtained by rolling the particle layer can be made to increase.

Furthermore, by enhancing the fluidity of the particles, density fluctuations of the particle layer can be reduced. As a result, fluctuations in basis weight of the rolled particle layer can be reduced.

### <2.2. Embodiment of method for producing rolled particle layer>

The method for producing a rolled particle layer according to the present embodiment includes the following steps (A), (B), (C), (D), and (E). The method for producing a rolled particle layer according to the present embodiment may include any optional step in addition to the steps (A), (B), (C), (D), and (E).

The method for producing a rolled particle layer according to the present embodiment is preferably a production method that further includes a step (F) of feeding a substrate before the step (A), and includes performing the steps (A) to (E) on the substrate. Hereinafter, the respective steps in the production method of the present embodiment will be described.

### (Step (F))

The step (F) is a step of feeding a substrate before the step (A), and specifically, a step of feeding a substrate from the upstream side relative to the feeding unit of the production apparatus.

As the substrate, a long-length substrate is usually fed.

Examples of the specific substrate may include: metal foils formed of aluminum, platinum, nickel, tantalum, titanium, stainless steel, copper, and other alloys; films containing electroconductive materials (e.g., carbon, electroconductive macromolecular materials); paper; fabric cloths formed of natural fibers, macromolecular fibers, and the like; and macromolecular resin films or sheets. The substrate may be appropriately selected therefrom depending on the intended purpose. Examples of the polymers that may be contained in the macromolecular resin films or sheets may include a polyester such as polyethylene terephthalate and polyethylene naphthalate, a polyimide, a polypropylene, a polyphenylene sulfide, a polyvinyl chloride, an aramid, PEN, and PEEK.

Among these, when electrode sheets for lithium ion battery electrodes are to be produced, the preferable substrate may be a metal foil, a carbon film, and an electroconductive macromolecular film, more preferably a metal foil. Among these, it is preferable to use a copper foil, an aluminum foil, or an aluminum alloy foil from the viewpoint of electroconductivity and withstand voltage. The substrate may be subjected to a surface treatment such as a coating film treatment, a punching process, a buffing process, a sand blasting process, and/or an etching process.

The thickness of the substrate is, for example, 1 µm or more, and preferably 5 µm or more, and is, for example, 1000 µm or less, and preferably 800 µm or less. The substrate may have any given width.

### (Step (G))

The production method according to the present embodiment may include, as an optional step, a step of applying a binder coating liquid containing a binder onto the surface of the substrate before the step (A) and after the step (F). In this case, in the step (A) described above, the particles are fed to the surface of the substrate onto which the binder coating liquid has been applied.

The binder contained in the binder coating liquid is preferably a compound capable of binding the particles and the substrate to each other. The binder coating liquid may contain additives such as a thickener and a surfactant in order to adjust the viscosity and wettability of the coating liquid. As the thickener and the surfactant, known ones can be used. Examples of the binder may include a styrene-butadiene rubber (SBR) aqueous dispersion, an acrylate-based polymer aqueous dispersion, a polyacrylic acid (PAA) aqueous solution, and a polyvinylidene fluoride (PVDF) organic solvent-based liquid. As the binder coating liquid, for example, a dispersion or solution containing a binder that may be contained in particles can be used.

### (Step (A))

The step (A) feeds the particles by the feeding unit. In the present embodiment, the particles are fed from the feeding unit onto the substrate.

The particles are not limited to particular ones, and for example, may be granulated particles containing an electrode active material and a binder. The granulated particles may contain a dispersant, an electroconductive material and/or an additive as other components, as necessary.

When the granulated particles contain an electrode active material, the electrode active material may be a positive electrode active material or a negative electrode active material. When the granulated particles are used as an electrode material for a lithium ion battery, examples of the positive electrode active material may include a metal oxide capable of being reversibly doped with lithium ions and undoped. Examples of such metal oxides may include lithium cobalt oxide (LiCoO₂), lithium nickel oxide (LiNiO₂), lithium manganese oxide (LiMn₂O₄), lithium iron phosphate (LiFeO₄), and ternary active materials obtained by substituting nickel and manganese for a part of lithium cobalt oxide (such as LiCo_{1/3}Ni_{1/3}Mn_{1/3}O₂).

As the positive electrode active material as exemplified above, one type thereof may be solely used, and two or more types thereof may also be used in combination, depending on its use purpose as appropriate.

Examples of the negative electrode active material as an opposite electrode to the positive electrode for lithium ion batteries may include low crystallizable carbons (amorphous carbon) such as easily graphitizable carbon, non-graphitizable carbon, and pyrolytic carbon; graphite (natural graphite and synthetic graphite); alloy-based materials containing tin, silicon, and the like; and oxides such as silicon oxide, tin oxide, and lithium titanate.

As the electrode active material as exemplified above, one type thereof may be solely used, and two or more types thereof may also be used in combination, depending on its use purpose as appropriate.

The electrode active material for lithium ion battery electrodes is preferably in a granular form that is uniformly granulated. When the shape of the particles is spherical, electrodes with higher density can be formed when forming electrodes.

The volume-average particle diameters (D50) of both the positive and negative electrode active materials for lithium ion battery electrodes are preferably 0.1 µm or more and 100 µm or less, more preferably 0.3 µm or more and 50 µm or less, and still more preferably 0.5 µm or more and 30 µm or less.

The binder that may be contained in the granulated particles is preferably a compound capable of binding the electrode active materials to each other. A more preferred binder is a dispersive binder having a property of dispersing in a solvent. Examples of the dispersive binder may include macromolecular compounds such as a silicone-based polymer, a fluorine atom-containing polymer, a conjugated diene-based polymer, an acrylate-based polymer, a polyimide, a polyamide, and a polyurethane. Examples of the preferable dispersive binder may include a fluorine atom-containing polymer, a conjugated diene-based polymer, and an acrylate-based polymer. A conjugated diene-based polymer and an acrylate-based polymer are more preferable.

The shape of the dispersive binder is not particularly limited, and is preferably particulate. The particulate dispersive binder has good binding properties and can suppress, in the produced electrode, capacity reduction and deterioration due to repetitive charging and discharging. Examples of the particulate binder may include an aqueous dispersion of binder particles such as latex, and a particulate binder obtained by drying such an aqueous dispersion.

The amount of the binder is usually 0.1 part by mass or more and 50 parts by mass or less, preferably 0.5 part by mass or more and 20 parts by mass or less, and more preferably 1 part by mass or more and 15 parts by mass or less, on a dry mass basis relative to 100 parts by mass of the electrode active material, from the viewpoint of sufficiently ensuring adhesion between the obtained electrode active material layer and the substrate and reducing the internal resistance.

The granulated particles may use a dispersant as described above, as necessary. Examples of the specific dispersant may include cellulosic polymers such as carboxymethylcellulose and methylcellulose, and ammonium or alkali metal salts thereof. As these dispersants, one type thereof may be solely used, and two or more types thereof may also be used in combination.

The granulated particles may use an electroconductive material as described above, as necessary. Examples of the specific electroconductive material may include electroconductive carbon blacks such as furnace black, acetylene black, and Ketjen black (registered trademark of Akzo Nobel Chemicals B.V.). Among these, acetylene black and Ketjen black are preferable. Vapor-grown carbon fibers such as VGCF (registered trademark) and carbon nanotubes; graphite-based carbon materials such as expanded graphite and graphite; and graphene can also be used as the electroconductive material. As these electroconductive materials, one type thereof may be solely used, and two or more types thereof may also be used in combination.

The granulated particles are obtained using an electrode active material, a binder, and other components such as the above-described electroconductive material added as necessary, followed by granulating. The resulting granulated particles contain at least the electrode active material and the binder. Each of the constituent components of the granulated particles does not exist as an individual particle. Instead, one particle is formed by two or more components including the electrode active material and the binder, which serve as constituent components. Specifically, it is preferable that a plurality of individual particles of two or more components are bonded to form secondary particles, and that a plurality of (preferably several to several tens of) electrode active materials are bonded with the binder to form particles.

The method for producing the granulated particles is not particularly limited. The granulated particles may be produced by any known granulation method such as a fluidized bed granulation method, a spray drying granulation method, and a tumbling bed granulation method.

The volume-average particle diameter (D50) of the particles is preferably 0.1 µm or more and 1000 µm or less, more preferably 1 µm or more and 500 µm or less, and still more preferably 30 µm or more and 250 µm or less, from the viewpoint of easily obtaining the rolled particle layer having a desired thickness.

The volume-average particle diameter (D50) of the particles is a 50% volume-average particle diameter measured in a dry manner using a laser diffraction-type particle size distribution measurement device (for example, Microtrac MT3300EX II; manufactured by MicrotracBEL Corp.) and calculated. The 50% volume-average particle diameter is the particle diameter at a point where the cumulative frequency accumulated from the smaller diameter side on the obtained particle size distribution (on a volume basis) reaches 50%.

The fed amount of the particles fed from the feeding unit can be adjusted as appropriate depending on the size of the substrate and the desired basis weight.

### (Step (B))

The step (B) is a step of supporting the particles fed from the feeding unit and conveying the particles from upstream to downstream by the supporting and conveying unit.

In the production method of the present embodiment, the supporting and conveying unit supports the particles with the intervention of the substrate, and conveys the particles together with the substrate from upstream to downstream.

The conveying speed is not particularly limited, and can be, for example, 1 m/min to 30 m/min, and for example, 10 m/min to 150 m/min.

### (Step (C))

In the step (C), the particles supported and conveyed by the supporting and conveying unit are leveled by the squeegee unit disposed with a gap provided between the squeegee unit and the supporting and conveying unit on the supporting and conveying unit to form a particle layer.

In the production method of the present embodiment, the squeegee unit levels the particles supported and conveyed by the supporting and conveying unit with the intervention of the substrate to form a particle layer.

In the step (C), the particles conveyed are caused to pass through the gap between the supporting and conveying unit and the squeegee unit so that the particles are leveled, thereby forming the particle layer having a predetermined thickness. The size of the gap between the supporting and conveying unit and the squeegee unit can be appropriately selected depending on the desired thickness, and the like of the rolled particle layer.

### (Step (D))

In the step (D), vibration is applied, by the ultrasonic vibration unit, to the particles supported and conveyed by the supporting and conveying unit on the upstream side relative to the gap between the supporting and conveying unit and the squeegee unit.

The vibration frequency in the ultrasonic vibration unit is usually higher than 20 kHz, preferably 30 kHz or higher, and preferably 38 kHz or lower. As described above, by applying vibration to the particles, the fluidity of the particles is enhanced, and the density of the particle layer to be formed is increased. As a result, the basis weight of the rolled particle layer obtained by rolling the particle layer can be made to increase.

Furthermore, by enhancing the fluidity of the particles, density fluctuations of the particle layer can be reduced. As a result, fluctuations in basis weight of the rolled particle layer can be reduced.

### (Step (E))

In the step (E), the rolling unit rolls the particle layer to form a rolled particle layer. When rolling the particle layer, the pressure applied to the particle layer can be appropriately adjusted depending on the desired thickness and density of the rolled particle layer.

The thickness of the rolled particle layer obtained by the step (E) is not particularly limited.

In another embodiment, in addition to the steps (A), (B), (C), (D), and (E), the method may include a step (H) of feeding a substrate after the steps (B), (C), and (D). Furthermore, the step (E) may include using the rolling unit to roll the particle layer, which was formed on the supporting and conveying unit, on the fed substrate, thereby transferring the rolled particle layer onto the substrate.

In yet another embodiment, in addition to the steps (A), (B), (C), (D), and (E), the method may include the above-mentioned step (F) of feeding a first substrate before the step (A), and may include a step (H) of feeding a second substrate after the steps (B), (C), and (D). Furthermore, the step (E) may include rolling the particle layer formed on the first substrate between the first substrate and the second substrate.

As an optional step, the method may include a step of applying a binder coating liquid containing a binder onto the surface of the substrate between the step (H) of feeding the substrate and the step (E).

### <3. Rolled particle layer>

The production apparatus for a rolled particle layer and the method for producing a rolled particle layer according to the present embodiment can be used for producing a rolled particle layer by rolling any optional particles.

The production apparatus for a rolled particle layer and the method for producing a rolled particle layer according to the present embodiment are not particularly limited, but may be used for producing electrode active material layers of various batteries. Among these, the production apparatus and method are preferably used for producing electrode active material layers of lithium ion batteries. When the substrate on which the electrode active material layer is formed is an electroconductive substrate, the substrate and the electrode active material layer can be obtained as electrodes (electrode sheets).

### [Examples]

Hereinafter, the present invention will be described in detail by illustrating Examples. However, the present invention is not limited to the Examples described below. The present invention may be optionally modified for implementation without departing from the scope of claims of the present invention and its equivalents.

In the following description, "%" and "part" representing quantity are on the basis of weight, unless otherwise specified. The operation described below was performed under the conditions of room temperature (20°C ± 15°C) and normal pressure (1 atm), unless otherwise specified.

### <Evaluation method>

The basis weight in the width direction of the electrode active material layer (rolled particle layer) was determined according to the following method.

A circular test piece having a diameter of 15.95 mm and an area of 2 cm² was punched out from negative electrode sheets obtained in Examples and Comparative Examples by a handheld punch (manufactured by Nogami Giken Co., Ltd.). Specifically, circular test pieces were punched out at five positions at equal intervals along the width direction of the negative electrode sheet. The five positions included positions 5 mm inward in the width direction from the ends of the negative electrode sheet in the width direction.

The mass of each of the five punched test pieces was measured, and the mass of the negative electrode active material layer per 1 cm² (basis weight) was calculated.

The measurement of the basis weight described above was performed twice at an arbitrarily selected position in the lengthwise direction of the negative electrode sheet. The average value of the obtained basis weights was calculated.

### <Examples 1 to 3>

### (Preparation of slurry for granulated particles)

Artificial graphite as a negative electrode active material, an acrylic binder, and a water-soluble macromolecule were mixed, and ion-exchanged water was added thereto. Then, they were mixed and dispersed, thereby obtaining a slurry for granulated particles.

### (Production of granulated particles)

The slurry for granulated particles was fed to a spray dryer and spray-drying granulation was performed to obtain granulated particles.

### (Production of negative electrode active material layer)

A binder coating liquid was prepared by dispersing in water the same acrylic binder as the binder used for the granulated particles. In addition, a long-length copper foil having a thickness of 10 µm and a width of 250 mm was prepared as a substrate (negative electrode current collector), and set in an electrode production line (production apparatus) illustrated in FIG. 1. The line speed (conveying speed of the substrate) was as shown in Table 1.

While strip-shaped current collector exposed portions were secured on both end portions in the width direction of the negative electrode current collector, the prepared binder coating liquid was applied by a coater (the coating unit 130 in FIG. 1) between the current collector exposed portions (central region in the width direction), thereby forming a binder coating liquid layer.

Then, the prepared granulated particles were fed, by a powder feeding device (feeding unit), to the central region in the width direction of the negative electrode current collector being conveyed.

Fluctuations in basis weight were eliminated by a squeegee roll (the squeegee roll 151 in FIG. 1) while the granulated particles fed onto the negative electrode current collector were conveyed together with the negative electrode current collector downstream. As a result, the height of the granulated particle layer in the vertical direction was leveled across the width direction to obtain a substantially uniform thickness.

In this process, an ultrasonic vibrator was activated to vibrate a plate-shaped portion connected to the ultrasonic vibrator, thereby applying vibration to the retained granulated particles between the conveying roll and the squeegee roll.

The negative electrode current collector and the granulated particle layer were rolled between the conveying roll (the conveying roll 141 in FIG. 1) and the rolling roll (the rolling roll 171 in FIG. 1), whereby an electrode active material layer (rolled particle layer) was formed on the negative electrode current collector.

The resulting layered body (negative electrode sheet) including the negative electrode active material layer and the negative electrode current collector was evaluated by the above-described methods. The average values of the basis weights are shown in Table 1.

### <Comparative Examples 1 to 3>

The ultrasonic vibrator was not activated, and no vibration was applied to the retained granulated particles between the conveying roll and the squeegee roll.

Other than the above matters, the same procedures were followed as in Examples 1 to 3 to obtain negative electrode sheets, which were then evaluated by the methods described above. The average values of the basis weights are shown in Table 1.

### <Results>

The average values of the basis weights for respective Examples and Comparative Examples are shown in Table 1.

### [Table 1]

**Table 1**

| Line speed | Ultrasonic vibration not applied | Ultrasonic vibration applied |
|---|---|---|
| 5m/min | 12.78 mg/cm² (Comparative Ex.1) | 14.52 mg/cm² (Ex.1) |
| 10m/min | 10.75 mg/cm² (Comparative Ex.2) | 11.30 mg/cm² (Ex.2) |
| 20m/min | 8.97 mg/cm² (Comparative Ex.3) | 9.10 mg/cm² (Ex.3) |

As shown in Table 1, the basis weights of Examples in which vibration was applied to the granulated particles were larger than the basis weights of Comparative Examples in which the line speed was the same.

FIG. 8 is a graph plotting the basis weights at five locations along the width direction of the negative electrode sheets for Example 1 and Comparative Example 1. As shown in FIG. 8, the basis weights of Example 1, in which vibration was applied to the granulated particles, are larger than the basis weights of Comparative Example 1, in which vibration was not applied to the granulated particles. It can also be seen that the basis weights of Example 1 have reduced fluctuations in the width direction as compared to the basis weights of Comparative Example 1. In Example 1, the difference between the basis weight at both ends in the width direction and the basis weight at the center in the width direction is particularly smaller than in Comparative Example 1.

### Reference Sign List

1 substrate
2 particle layer
3 rolled particle layer
100 production apparatus for a rolled particle layer
110 feeding unit
120 substrate unwinding unit
130 coating unit
140 supporting and conveying unit
141 conveying roll(supporting and conveying unit, rolling unit)
150 squeegee unit
151 squeegee roll
152 stock guide unit
160 ultrasonic vibration unit
161 ultrasonic vibrator
162 vibration transmitting member
162p plate-shaped portion
162pf curved surface
162a plate-shaped portion
162b plate-shaped portion
162c plate-shaped portion
162d plate-shaped portion
163b projecting portion
163c projecting portion
163d projecting portion
163bT tip end
163cT tip end
163dT tip end
163bS inclined portion
163cS inclined portion
170 rolling unit
171 rolling roll
180 collection unit
200 production apparatus for a rolled particle layer
NP gap

## Claims

1. A production apparatus for a rolled particle layer comprising:
a feeding unit configured to feed particles;
a supporting and conveying unit configured to support the particles fed from the feeding unit and convey the particles from upstream to downstream;
a squeegee unit disposed with a gap between the squeegee unit and the supporting and conveying unit on the supporting and conveying unit, the squeegee unit being configured to level the particles supported and conveyed by the supporting and conveying unit to form a particle layer;
an ultrasonic vibration unit configured to apply vibration to the particles, which are supported and conveyed by the supporting and conveying unit, on an upstream side relative to the gap between the supporting and conveying unit and the squeegee unit; and
a rolling unit configured to roll the particle layer to form a rolled particle layer.

2. The production apparatus for a rolled particle layer according to claim 1, wherein:
the supporting and conveying unit includes a conveying roll configured to be rotatable about a rotation axis R1 in a direction in which the particles are conveyed from upstream to downstream;
the squeegee unit includes a squeegee roll configured to be rotatable about a rotation axis R2 parallel to the rotation axis R1;
the squeegee roll is disposed on the conveying roll with a gap between the squeegee roll and the conveying roll; and
the ultrasonic vibration unit includes an ultrasonic vibrator and a plate-shaped portion connected to the ultrasonic vibrator, the plate-shaped portion being disposed between the conveying roll and the squeegee roll.

3. The production apparatus for a rolled particle layer according to claim 2, wherein the plate-shaped portion includes an opening capable of allowing the particles to pass through in a thickness direction of the plate-shaped portion.

4. The production apparatus for a rolled particle layer according to claim 2, wherein the plate-shaped portion includes a projecting portion that projects toward a plane P1 including the rotation axis R1 of the conveying roll and the rotation axis R2 of the squeegee roll.

5. The production apparatus for a rolled particle layer according to claim 4, wherein the plate-shaped portion includes a plurality of the projecting portions.

6. The production apparatus for a rolled particle layer according to claim 4, wherein the plate-shaped portion includes only one projecting portion, and a tip end of the projecting portion is on a center line of the plate-shaped portion in a direction parallel to the rotation axis R1.

7. A method for producing a rolled particle layer, comprising the steps of:
feeding particles by a feeding unit;
supporting and conveying the particles fed from the feeding unit from upstream to downstream by a supporting and conveying unit;
leveling the particles, which are supported and conveyed by the supporting and conveying unit, by a squeegee unit disposed with a gap between the squeegee unit and the supporting and conveying unit on the supporting and conveying unit to form a particle layer;
applying, by an ultrasonic vibration unit, vibration to the particles, which are supported and conveyed by the supporting and conveying unit, on an upstream side relative to the gap between the supporting and conveying unit and the squeegee unit; and
rolling the particle layer by a rolling unit to form a rolled particle layer.
